# EUROPÄISCHE PATENTSCHRIFT

(11) **EP 2 719 046 B1**
(45) Veröffentlichungstag und Bekanntmachung des Hinweises auf die Patenterteilung: **10.02.2016**
(21) Anmeldenummer: 11749789.1
(22) Anmeldetag: 17.08.2011
(51) Int. Cl.: H02J 3/14, G05B 19/418

(54) **DEZENTRALES ENERGIEMANAGEMENT BEI AUTOMATISIERUNGSANLAGEN**
DECENTRALIZED ENERGY MANAGEMENT IN AUTOMATION INSTALLATIONS
GESTION DE L'ÉNERGIE DÉCENTRALISÉE DANS DES INSTALLATIONS D'AUTOMATISATION

(43) Veröffentlichungstag der Anmeldung: 16.04.2014
(73) Patentinhaber: Siemens Aktiengesellschaft, 80333 München (DE)
(72) Erfinder: GRAF, Rene, 90443 Nürnberg (DE); KONOPKA, Frank, 90518 Altdorf (DE)
(86) Internationale Anmeldenummer: PCT/EP2011/064158
(87) Internationale Veröffentlichungsnummer: WO 2013/023692

(56) Entgegenhaltungen:
- EP-A1- 1 263 108
- EP-A1- 1 717 923
- WO-A2-2007/065135
- WO-A2-2010/081165
- WO-A2-2011/006830

## Beschreibung

Die Erfindung betrifft ein Verfahren zur vorausschauenden Regulierung der Energieflüsse in einem elektrischen Versorgungsnetz einer Automatisierungsanlage mit einer Anzahl von Anschlussgeräten, welche an das Versorgungsnetz angeschlossen sind. Die Erfindung betrifft weiter ein Energieregulierungssystem zur vorausschauenden Regulierung der Energieflüsse in einem elektrischen Versorgungsnetz einer solchen Automatisierungsanlage und die Erfindung betrifft schließlich eine entsprechende Automatisierungsanlage.

Als Energiemanagement oder Energiecontrolling bezeichnet man üblicherweise die energietechnische Planung eines Systems einerseits und die Regulierung der Energieflüsse im System während des Betriebes andererseits. Im Vordergrund stehen dabei vor allem die Gewährleistung der Versorgungssicherheit, die Einhaltung von Wertevorgaben für vorgegebene charakteristische Größen sowie die Berücksichtigung von wirtschaftlichen Faktoren und Umweltgesichtspunkten. Diese Basisanforderungen oder grundlegenden Zielvorgaben sind stets dieselben unabhängig davon, ob es sich bei dem System um einen CD-Player, eine Heizungsanlage, ein Einfamilienhaus oder eine große Automatisierungsanlage, also beispielsweise eine industrielle Produktionsanlage, handelt.

Im Falle einer Automatisierungsanlage, bei der mehrere Subsysteme oder Anschlussgeräte an ein gemeinsames elektrisches Versorgungsnetz angeschlossen sind, gilt es zum Beispiel sicherzustellen, dass alle Subsysteme zur Deckung ihres Energiebedarfs, und dementsprechend zur Gewährleistung der Versorgungssicherheit, während des Betriebs zu jedem Zeitpunkt mit ausreichend elektrischer Energie versorgt werden. Darüber hinaus sind bei einer Versorgung mit elektrischer Energie als charakteristische Größen Spannungs- und Stromstärkewerte vorgegeben, die zur Gewährleistung der Funktionssicherheit der Automatisierungsanlage sowie deren Subsysteme nur innerhalb gewisser Grenzen über- oder unterschritten werden dürfen. Außerdem ist es sowohl aus ökonomischer als auch aus ökologischer Sicht gewünscht, dass der Energiebedarf der Automatisierungsanlage in Abhängigkeit einer vorgegebenen Betriebsweise möglichst gering ausfällt.

Prinzipiell bekannt ist bei Automatisierungsanlagen eine einfache Energieverwaltung, also ein Energiemanagement während des Betriebs, mittels einer zentralen Steuereinheit und einem Software-Tool, wie beispielsweise "PROFIenergy". Entsprechend der dabei zu Grunde liegenden Idee senden die Subsysteme regelmäßig Kommunikationsprotokolle, im Falle des Software-Tools "PROFIenergy" gemäß dem Standard "PROFINET", an die zentrale Steuereinheit, wobei aktuelle Zustandskenngrößen, wie der Bedarf an elektrischer Energie, übermittelt werden. Die zentrale Steuereinheit reguliert dann auf der Basis dieser Daten die Energieflüsse hin zu den Subsystemen und gibt die entsprechenden Eingangsspannungen und Eingangsströme an den Subsystemen vor.

Hiervon ausgehend liegt der Erfindung die Aufgabe zugrunde, ein Verfahren oder eine Vorrichtung anzugeben, mit dessen bzw. deren Hilfe ein verbessertes Energiemanagement realisiert wird.

Bezüglich des Verfahrens wird diese Aufgabe erfindungsgemäß durch die Merkmale des Anspruchs 1 gelöst. Die rückbezogenen Ansprüche beinhalten teilweise vorteilhafte und teilweise für sich selbst erfinderische Weiterbildungen dieser Erfindung. Bezüglich der Vorrichtung wird diese Aufgabe sowohl durch die Merkmale des Anspruchs 11 als auch durch die Merkmale des Anspruchs 12 gelöst.

Das Verfahren dient zur vorausschauenden Regulierung der Energieflüsse in einem elektrischen Versorgungsnetz einer Au-Automatisierungsanlage mit einer Anzahl von Anschlussgeräten, welche an das Versorgungsnetz angeschlossen sind, so dass hierdurch ein Energiemanagement für die Automatisierungsanlage realisiert ist. Im Rahmen des Verfahrens tauschen die Anschlussgeräte Informationen über ihren Energiebedarf oder ihr Energieangebot untereinander aus. Auf der Basis dieser Informationen erfolgt dann der Austausch von Energie über das elektrische Versorgungsnetz. Als Automatisierungsanlage im Sinne dieser Anmeldung werden hierbei insbesondere automatisierte industrielle Produktionsanlagen sowie automatisierte Logistikanlagen, wie zum Beispiel eine Sortier- und Förderanlage für Gepäck an einem Flughafen, betrachtet.

Da die Regulierung der Energieflüsse im Versorgungsnetz nicht nur reagierend sondern auch vorausschauend erfolgen soll, werden nicht nur Informationen über den aktuellen Zustand der Anschlussgeräte ausgetauscht, sondern auch Informationen über bevorstehende oder geplante Betriebszustandsänderungen. Der Austausch der Informationen oder Daten erfolgt hierzu vorzugsweise von Hilfe von Kommunikationsprotokollen, beispielsweise gemäß dem Standard "PROFINET", und insbesondere durch Nutzung bereits vorhandener Kommunikationslösungen, die zu Gunsten des Verfahrens erweitert oder modifiziert werden. Im Falle eines Elektromotors als Anschlussgerät sind beispielsweise aktuelle Drehzahlwerte, anstehende Drehzahländerungen, ein aktueller Betriebsmodus und eine anstehende Betriebsmodusänderung für den Datenaustausch vorgesehen. Der Betriebsmodus gibt hierbei an, ob der Elektromotor als Elektromotor im eigentlichen Sinne arbeitet oder ob dieser als Generator wirkt. Bei einer Automatisierungsanlage, für die das hier vorgestellte Verfahren ausgelegt ist, sind mehrere solcher Elektromotoren als Anschlussgeräte an ein gemeinsames elektrisches Versorgungsnetz angeschlossen und so lässt sich der Energiebedarf derjenigen Elektromotoren, die als elektrische Verbraucher wirken, zumindest teilweise durch das Energieangebot abdecken, welches von denjenigen Elektromotoren, die als Generatoren und dementsprechend als elektrische Erzeuger wirken, zur Verfügung gestellt wird. Die Energieflüsse werden somit derart reguliert, dass der Energiebedarf der Energie-Verbraucher vorrangig durch das Energieangebot der Energie-Erzeuger gedeckt wird. Hierdurch soll die Energieumverteilung innerhalb der Automatisierungsanlage besonders effektiv vorgenommen und auf eine Energiezufuhr von außen, soweit möglich, verzichtet werden, wobei bevorzugt auf die Nutzung von Energiezwischenspeichern, soweit möglich, verzichtet wird. Da das Einspeichern und Ausspeichern von elektrischer Energie in Zwischenspeicher oder aus Zwischenspeichern für elektrische Energie typischerweise mit Verlusten behaftet ist, lässt sich auch durch die Vermeidung eben dieser Verluste der Energiebedarf der Automatisierungsanlage insgesamt reduzieren.

Durch den Austausch von Informationen zwischen den Anschlussgeräten wird insbesondere dafür Sorge getragen, dass die von Elektromotoren, die als Generatoren wirken, generierte elektrische Energie möglichst vollständig zum Betreiben der Automatisierungsanlage genutzt wird. Sind die Elektromotoren beispielsweise Bestandteil eines Energie-Rückgewinnungs-Systems, mit welchem kinetische Energie in elektrische Energie umgewandelt wird, so lässt sich die Umwandlung der kinetischen Energie in elektrische Energie nicht zu einem beliebigen Zeitpunkt durchführen, da die kinetische Energie typischerweise mit der Zeit durch Reibungsverluste abgebaut wird. Damit also das Energie-Rückgewinnungs-System möglichst effektiv arbeitet, muss die kinetische Energie in elektrische Energie umgewandelt werden, sobald die entsprechende Bewegung in der Automatisierungsanlage nicht mehr genutzt wird. Zwar lässt sich die über das Energie-Rückgewinnungs-System gewonnene elektrische Energie auch in einem Zwischenspeicher für elektrische Energie zwischenspeichern, jedoch ist das Laden und Entladen eines dafür geeigneten Akkumulators typischerweise ebenfalls mit Verlusten verbunden, weswegen es von Vorteil ist, mit Hilfe des Energie-Rückgewinnungs-Systems gewonnene elektrische Energie direkt einem elektrischen Verbraucher zuzuführen, sofern dessen Betrieb ohnehin vorgesehen ist.

Ein besonders anschauliches Beispiel stellt eine Sortier- und Förderanlage für Brief- oder Paketsendungen dar, bei der mehrere Förderbänder aus Fördersegmenten aufgebaut sind. Die Fördersegmente sind mit Hilfe von Elektromotoren betrieben und weisen Lichtschranken auf, mit denen Gegenstände registriert werden, die auf das Förderbandsegment gelangt sind oder das Förderbandsegment verlassen haben. Anstatt ein solches Förderbandsegment dauerhaft anzutreiben, wird dieses immer dann gestartet, sobald eine Brief- oder Paketsendung an das Förderbandsegment gelangt und dementsprechend eine der Lichtschranken unterbricht. Die Brief- oder Paketsendung wird sodann mit Hilfe des Förderbandsegments über eine vordefinierte Strecke transportiert und löst beim Verlassen des Förderbandsegments an dessen Ende die zweite Lichtschranke aus, wodurch der Energierückgewinnungsmodus aktiviert wird und die kinetische Energie des Förderbandsegments mit Hilfe des nun als Generator wirkenden Elektromotors in elektrische Energie umgewandelt wird. Diese zurückgewonnene elektrische Energie wird wiederum genutzt, um ein anderes Förderbandsegment zu starten, welches gerade genutzt werden soll. Im Vergleich zu einem dauerhaften Betrieb der Förderbandsegmente lässt sich mit diesem Konzept ein großer Anteil an elektrischer Energie für den Betrieb einsparen.

Wie zuvor erwähnt erfolgt gemäß dem hier vorgestellten Verfahren die Regulierung der Energieflüsse im Versorgungsnetz nicht nur reagierend sondern auch vorausschauend und daher tauschen die Anschlussgeräte auch Informationen über die zu erwartende zeitliche Entwicklung ihres Energiebedarfs oder ihres Energieangebots untereinander aus und auf der Basis dieser Informationen erfolgt ein Austausch von Energie. Als Quelle für diese Informationen sind einerseits Sensoren vorgesehen, wobei auf der Basis der Sensordaten eine Kalkulation der weiteren zeitlichen Entwicklung erfolgt, und andererseits sollen Steuersignale ausgewertet werden, die den Prozess steuern, der mit der entsprechenden Automatisierungsanlage umgesetzt wird. Im Falle einer industriellen Produktionsanlage werden typischerweise im Rahmen der sogenannten Produktionsplanung Rahmenbedingungen vorgegeben, die den Produktionsprozess und damit die Betriebsweise der Produktionsanlage zumindest grob festlegen. Beispielsweise wird über eine solche Produktionsplanung vorgegeben, welche Produktionsmenge pro Zeiteinheit mit der Produktionsanlage erreicht werden soll. Mit Hilfe einer zentralen Steuereinheit für die Produktionsplanung werden dann die einzelnen Funktionsbausteine der Produktionsanlage, die üblicherweise aufeinander abgestimmt arbeiten, angesteuert, so dass die vorgegebene Produktionsmenge im entsprechenden Zeitraum erreicht wird.

Zur weiteren Verdeutlichung sei ein einfaches Beispiel angenommen, bei der zwei Arbeitsstationen gegeben sind, die durch ein Fließband miteinander verbunden sind. An der ersten Arbeitsstation werden zwei Bauteile zu einem Zwischenprodukt zusammengesetzt, welches anschließend über das Förderband an die zweite Arbeitsstation weitergegeben wird. In der zweiten Arbeitsstation wird das Zwischenprodukt lackiert, wodurch das fertige Endprodukt entsteht. Soll nun die Produktionsrate erhöht werden, so erhält zunächst die erste Arbeitsstation ein Steuersignal, mit dem das Arbeitstempo dieser Arbeitsstation gesteigert wird. Nachfolgend ergeht ein Steuersignal an das Förderband, so dass die Fördergeschwindigkeit angehoben wird und schließlich ergeht mit einer gewissen zeitlichen Verzögerung ein Steuersignal auch an die zweite Arbeitsstation, um das Arbeitstempo auch an dieser Station zu erhöhen. Alternativ zu einer zeitversetzten Versendung der Steuersignale, lassen sich auch Steuersignale generieren, die zeitversetzt eine Betriebszustandsänderung auslösen, jedoch zeitgleich von der zentralen Steuereinheit versendet werden.

Bereits an diesem einfachen Beispiel zeigt sich, dass eine ganze Reihe von Betriebszustandsänderungen einzelner Anschlussgeräte mit einer gewissen Vorwarnzeit auftreten, so dass die daraus resultierende zeitliche Entwicklung des Energiebedarfs des betroffenen Anschlussgeräts in die vorausschauende Regulierung der Energieflüsse im elektrischen Versorgungsnetz einfließen kann. Welche Betriebszustandsänderungen mit welcher Vorwarnzeit im System, also der Automatisierungsanlage, bekannt sind, hängt insbesondere davon ab, ob es sich um eine geplante Betriebszustandsänderung oder um eine sogenannte unvorhergesehene Betriebszustandsänderung handelt.

Als geplante Betriebszustandsänderung bezeichnet man zum Beispiel ein vorübergehendes Herunterfahren oder Abschalten von Teilen einer Produktionsanlage oder der gesamten Produktionsanlage. Da auch eine automatisierte industrielle Produktionsanlage typischerweise nicht ohne Personal betrieben werden kann, ist es zweckmäßig, Anlagenteile oder die gesamte Anlage während der vorgesehenen Pausen für das Personal in einen Stand-by-Modus herunterzufahren oder gar abzuschalten. Derartige Änderungen im Produktionsprozess sind dem System mit einer sehr langen Vorwarnzeiten bekannt, so dass sich die damit verbundenen Betriebszustandsänderungen der Anschlussgeräte vollständig im Rahmen des Energiemanagements berücksichtigen lassen.

Unvorhergesehene Betriebszustandsänderungen, die in der Regel durch Fehler oder Defekte in der Produktionsanlage hervorgerufen werden, bedingen hingegen sehr kurze Vorwarnzeiten, so dass hier mitunter nur auf Betriebszustandsänderungen reagiert werden kann. Allerdings treten im Falle einer Produktionskette die Betriebszustandsänderungen von Anschlussgeräten, die Teil dieser Produktionskette sind, mit einem zeitlichen Versatz entsprechend der Abfolge in der Produktionskette auf, so dass hier zumindest einige der Betriebszustandsänderungen mit ausreichender Vorwarnzeit bekannt sind und sich dementsprechend beim Energiemanagement berücksichtigen lassen.

Weiter ist eine Verfahrensvariante zweckmäßig, bei der für den Austausch von Informationen im Wesentlichen Datenprotokolle ohne Vorgabe eines Adressaten genutzt werden. Die Informationen werden dementsprechend als sogenannte "Broadcast"-Nachrichten übermittelt, wodurch jedes Anschlussgerät auf die Informationen aller übrigen Anschlussgeräte Zugriff hat. Diese Art der Kommunikation eignet sich insbesondere, wenn der eigentliche Adressat zunächst nicht bekannt ist. Im hier vorliegenden Fall soll ein Ausgleich zwischen dem Energieangebot und dem Energiebedarf der Anschlussgeräte erfolgen, wobei jedes Anschlussgerät zunächst keine Informationen darüber hat, welches der übrigen Anschlussgeräte welchen Energiebedarf aufweist oder welches Energieangebot darbietet. Dementsprechend gibt ein Anschlussgerät quasi allen übrigen Anschlussgeräten bekannt, welchen Energiebedarf dieses hat oder welches Energieangebot dieses darbietet und wie sich dieser Status in naher Zukunft verändert. Haben alle Anschlussgeräte ihren Status bekannt gegeben, so ist letztlich der gesamte Energiebedarf und das gesamte Energieangebot aller Anschlussgeräte der Automatisierungsanlage bekannt, woraufhin eine Regulierung der Energieflüsse zum Zwecke eines Ausgleichs zwischen Energieangebot und Energiebedarf im elektrischen Versorgungsnetz erfolgt.

In vorteilhafter Weiterbildung bilden die Anschlussgeräte schließlich ein selbstorganisierendes Gerätenetzwerk aus, wodurch auf eine zentrale Steuereinheit zur Regulierung der Energieflüsse im elektrischen Versorgungsnetz verzichtet werden kann. Dementsprechend stellt jedes Anschlussgerät, welches aktuell als elektrischer Erzeuger wirkt und dementsprechend elektrische Energie generiert, selbständig jedem übrigen Anschlussgerät, welches sich im System als aktueller elektrischer Verbraucher meldet, elektrische Energie zur Verfügung. Eine zentrale Steuereinheit, die die Informationen der Anschlussgeräte auswertet und die Energieverteilung steuert, ist nicht vorgesehen.

Insbesondere im Falle von großen Automatisierungsanlagen mit entsprechend vielen Anschlussgeräten ist eine Verfahrensvariante von Vorteil, bei der das selbstorganisierende Gerätenetzwerk in Subnetzwerke unterteilt ist, wobei die Anschlussgeräte eines Subnetzwerkes zunächst untereinander Informationen und Energie austauschen und wobei schließlich ein Energiebedarf oder ein Energieangebot, welcher nicht innerhalb eines Subnetzwerkes kompensiert werden kann, durch einen Informations- und Energieaustausch zwischen den Subnetzwerken soweit möglich kompensiert wird. Wenn beispielsweise eine Automatisierungsanlage aus mehreren Teilanlagen aufgebaut ist, wobei jede Teilanlage in einer eigenen Produktionshalle untergebracht ist, dann sollen zunächst die Anschlussgeräte innerhalb einer Produktionshalle Informationen und Energie untereinander austauschen, und nur wenn sich der Energiebedarf nicht durch das Energieangebot innerhalb einer Produktionshalle decken lässt oder das Energieangebot nicht vollständig aufgrund des Energiebedarfs genutzt werden kann, dann soll ein Energieaustausch zwischen den einzelnen Produktionshallen erfolgen. Auf diese Weise lässt sich unter anderem der mit Verlusten behaftete Energietransport von elektrischer Energie über Kabelverbindungen auf ein geringes Maß reduzieren, da der Energieaustausch bevorzugt lokal über kurze Verbindungsstrecken erfolgt.

Zweckmäßig ist es weiter, wenn das Versorgungsnetz an ein externes Versorgungs- oder Verteilernetz angeschlossen ist, welches die zeitabhängige Differenz zwischen einem vorgegebenen Energiebedarf und einem vorgegebenen Energieangebot aller angeschlossenen Anschlussgeräte ausgleicht. Insbesondere bei Produktionsanlagen lässt sich der durch die Produktionsplanung vorgegebene Energiebedarf nicht ohne zusätzliche externe Energiequellen abdecken. Auch wenn bei modernen Produktionslagen zunehmend interne Energiequellen, wie zum Beispiel Solaranlagen oder Windkraftanlagen, zum Einsatz kommen und darüber hinaus Energie-Rückgewinnungs-Systeme genutzt werden, muss dennoch ein Teil des Energiebedarfs über einen sogenannten EVU-Anschluss, also einen Anschluss des Versorgungsnetzes der Produktionsanlage an ein Verteilernetz eines Energieversorgerunternehmens, gedeckt werden. Ein solcher EVU-Anschluss wirkt dabei nicht als Anschlussgerät und ist dementsprechend auch nicht Teil des selbstorganisierenden Netzwerkes. Infolgedessen erfolgt auch kein Informationsaustausch zwischen dem EVU-Anschluss und den Anschlussgeräten. Stattdessen wird der EVU-Anschluss vom selbstorganisierenden Netzwerk als unerschöpfliche Energiequelle betrachte, deren Energiebedarf oder deren Energieangebot stets dem Energieangebot bzw. dem Energiebedarf der gesamten Automatisierungsanlage entspricht.

Von Vorteil ist zudem eine Verfahrensvariante, bei der die Energieflüsse im Rahmen des Energiemanagements derart reguliert werden, dass die zeitabhängige Differenz zwischen einem zeitabhängig vorgegebenen Energiebedarf und einem zeitabhängig vorgegebenen Energieangebot aller Anschlussgeräte im Wesentlichen, also der über den EVU-Anschluss abzudeckende Energiebedarf konstant ist. Ziel ist es dabei insbesondere die Last, die die Automatisierungsanlage aus Sicht des Verteilernetzes des Energieversorgerunternehmens darstellt und die am EVU-Anschluss wirksam ist, möglichst konstant zu halten. Da eine Automatisierungsanlage und insbesondere eine Produktionsanlage typischerweise einen verhältnismäßig hohen Energiebedarf aufweist und prinzipiell Schwankungen des Energiebedarfs möglich sind, die zum Beispiel bei der Stilllegung der Automatisierungsanlage über Nacht von derselben Größenordnung sind, wie der durchschnittliche Energiebedarf der Automatisierungsanlage, wirken sich Schwankungen im Energiebedarf der Automatisierungsanlage zum Teil deutlich auf die Stabilität im Verteilernetz des Energieversorgungsunternehmens aus, wodurch wiederum die Versorgungssicherheit anderer an das Verteilernetz angeschlossenen Systeme gefährdet wird. Aus diesem Grund müssen die Betreiber der Produktionsanlage den zu erwartenden Energiebedarf sowie die voraussichtliche zeitabhängige Entwicklung des Energiebedarfs an das Energieversorgerunternehmen übermitteln, so dass dieses sich hierauf einstellen kann, indem beispielsweise die Leistung der das Verteilernetz speisenden Kraftwerke an den zeitlichen Verlauf des zu erwartenden Energiebedarfs angepasst wird. Weicht der tatsächliche Energiebedarf in einem bestimmten Zeitraum vom vorangekündigten Energiebedarf ab, so bedingt dies Schwankungen im Verteilernetz, die nur mit hohem technischen Aufwand kompensiert werden können. Für diese Kompensation stellt das Energieversorgerunternehmen dem Betreiber der Automatisierungsanlage zusätzliche Kosten in Rechnung, die sehr viel höher liegen als die Kosten für die elektrische Energie, welche zur Deckung des vorangekündigten Energiebedarfs genutzt wird. Um solche Zusatzkosten zu vermeiden, wird das Energiemanagement derart gestaltet, dass der aktuelle Energiebedarf der Produktionsanlage möglichst genau den vorangekündigten Energiebedarf der Automatisierungsanlage entspricht. Darüber hinaus trägt die Vermeidung von deutlichen Lastschwankungen im Verteilernetz einerseits und im Versorgungsnetz andererseits auch zur Betriebssicherheit der Automatisierungsanlage selbst bei.

Entsprechend einer weiteren sehr zweckmäßigen Verfahrensvariante werden die Energieflüsse derart reguliert, dass die zeitabhängige Differenz zwischen einem zeitabhängig vorgegebenen Energiebedarf und einem zeitabhängig vorgegebenen Energieangebot aller Anschlussgeräte im zeitlichen Mittel minimiert ist. Das bedeutet, dass der Energiebedarf der Automatisierungsanlage und insbesondere der Energiebedarf, der über den EVU-Anschluss gedeckt wird, möglichst gering gehalten wird. Hierbei gilt es unter anderem, die eingesetzten Energie-Rückgewinnungs-Systeme effektiv zu nutzen.

Zudem ist es zweckmäßig, wenn zumindest ein Anschlussgerät je nach Betriebszustand als Energie-Verbraucher, Energie-Erzeuger oder Energie-Speicher wirkt. Gerade bei der Nutzung von Energie-Rückgewinnungs-Systemen ist es sinnvoll, für die Umwandlung von elektrischer Energie in kinetische Energie und bei der Umwandlung von kinetischer Energie in elektrische Energie, was typischerweise als Energierückgewinnung bezeichnet wird, ein und denselben Elektromotor zu nutzen. Dieser fungiert dann entweder als Elektromotor im eigentlichen Sinn oder jedoch als Generator. Dementsprechend wirkt ein solches Anschlussgerät dann je nach Betriebszustand entweder als Energie-Verbraucher, also als Elektromotor, oder aber als Energie-Erzeuger, also als Generator.

Die Erfindung wird nachfolgend anhand einer schematischen Zeichnung näher erläutert. Darin zeigen:
- FIG 1: in einer ausschnittsweisen Blockschaltbilddarstellung eine automatisierte Produktionsanlage und
- FIG 2: in einer ausschnittsweisen Blockschaltbilddarstellung eine automatisierte Sortier- und Förderanlage.

Einander entsprechende Teile sind in allen Figuren mit den gleichen Bezugszeichen versehen.

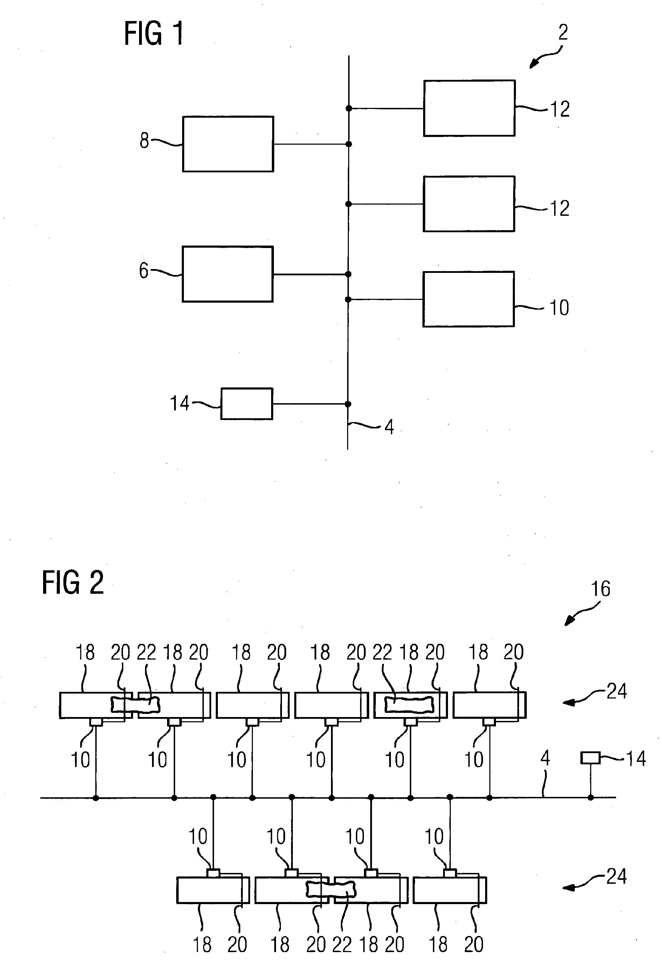

Im nachfolgend beschriebenen Ausführungsbeispiel kommt das hier beschriebene Verfahren exemplarisch bei einer in FIG 1 gezeigten Automatisierungsanlage zum Einsatz, die durch eine industrielle Produktionsanlage 2 mit einem elektrischen Versorgungsnetz 4 gegeben ist, an welches fünf Anschlussgeräte angeschlossen sind.

Als Beispiel für ein als Energie-Verbraucher wirkendes Anschlussgerät ist eine Arbeitsstation 6 dargestellt, welche in Abhängigkeit ihres Betriebszustandes einen bestimmten Energiebedarf aufweist. Jener Betriebszustand der Arbeitsstation 6 ist dabei typischerweise durch die sogenannte Produktionsplanung vorgegeben, durch welche beispielsweise Parameter wie die pro Zeiteinheit zu fertigende Produktstückzahl festgelegt sind. Weiter wird im Rahmen einer Produktplanung beispielsweise festgelegt, zu welchen Zeiten die Produktionsanlage 2 für die Produktfertigung genutzt wird und zu welchen Zeiten die Produktionsanlage oder Teile der Produktionsanlage in einen Standby-Modus versetzt oder abgeschaltet werden. Weil zur Bedienung auch einer automatisierten Produktionsanlage 2 Personal benötigt wird, müssen selbst bei einem 24 Stunden-Schichtbetrieb Produktionspausen eingeplant werden, während derer das Personal pausieren kann. Da größere Produktionsanlagen 2 häufig mittels eines komplexen und zeitintensiven Startvorgangs in den produktionsbereiten Zustand versetzt werden müssen, ist es üblich eine Produktionsanlage für kürzere Unterbrechungen der Produktion nicht abzuschalten, sondern in einen Standby-Modus zu versetzen. Dieser Standby-Modus ist ein Betriebsmodus, bei dem der Energiebedarf einen Bruchteil des Energiebedarfs während der Produktion entspricht und der es gleichzeitig erlaubt, die Produktionsanlage mit Hilfe eines vereinfachten und weniger zeitintensiven Reaktivierungsvorgangs zurück in den produktionsbereiten Zustand zu versetzen. Eine Abschaltung der Produktionsanlage erfolgt dementsprechend typischerweise nur bei einer Unterbrechung der Produktion für mehrere Stunden, also zum Beispiel für den Zeitraum der Betriebsferien.

Derartige durch die Produktionsplanung initiierte Betriebszustandsänderungen der Anschlussgeräte sind mit ausreichender Vorwarnzeit dem System, also der Produktionsanlage 2, bekannt, sodass diese Betriebszustandsänderungen eine vorausschauende Regulierung der Energieflüsse im elektrischen Versorgungsnetz 4 erlauben. Daneben sind jedoch auch unplanmäßige Betriebszustandsänderungen möglich, welche zum Beispiel auftreten, wenn irgendwo in der Produktionsanlage 2 ein Problem oder ein Defekt gegeben ist. Bei derartigen unplanmäßigen Betriebszustandsänderungen sind die Vorwarnzeiten mitunter sehr gering, so dass dann lediglich eine reagierende Regulierung der Energieflüsse möglich ist. Davon betroffen sind jedoch in der Regel nicht alle Anschlussgeräte, da häufig mehrere Anschlussgeräte eine Produktionskette ausbilden und dementsprechend verschiedene Teilschritte im Produktionsprozess in gegebener Abfolge ausführen. Tritt also ein Problem oder Defekt an einem Anschlussgerät auf, so wird bei diesem Anschlussgerät tendenziell eine Betriebszustandsänderung ohne ausreichende Vorwarnzeit erfolgen. Für die in der Produktionskette nachfolgenden Anschlussgeräte jedoch erfolgt die entsprechende Betriebszustandsänderung entsprechend der Abfolge in der Produktionskette mit zeitlicher Verzögerung, wodurch bei diesen Anschlussgeräten eine ausreichende Vorwarnzeit gegeben ist.

Wenn also beispielsweise die erste Arbeitsstation einer Produktionskette aufgrund eines Defektes automatisch abschaltet, so erfolgt diese Abschaltung abrupt und der dadurch bedingte geringere Energiebedarf der Produktionsanlage 2 tritt ohne eine ausreichende Vorwarnung an das System abrupt auf. Bei den in der Produktionskette nachgeschalteten Arbeitsstationen selbst tritt kein Defekt auf, so dass hier zunächst keine automatische Abschaltung erfolgt. Da jedoch die erste Arbeitsstation ihren Betrieb eingestellt hat, bleibt die Versorgung der nachgeschalteten Arbeitsstationen mit Produkten aus, weswegen diese mit gewisser zeitlicher Verzögerung ihren Betrieb ebenfalls einstellen. Sobald in der Produktionsanlage 2 die abrupte Abschaltung der Arbeitsstation 1 erfasst wird, ist auch bekannt, dass mit vorgegebenem zeitlichen Abstand Betriebszustandsänderungen, hier Abschaltungen, der in der Produktionskette nachgeschalteten Arbeitsstationen nachfolgen werden. Dementsprechend können zumindest die Betriebszustandsänderungen der nachgeschalteten Arbeitsstationen bei der vorausschauenden Regulierung der Energieflüsse im elektrischen Versorgungsnetz 4 berücksichtigt werden.

Als weiteres Beispiel für ein Anschlussgerät ist in FIG 1 ein Dieselgenerator 8 abgebildet. Dieser speist in Abhängigkeit seines Betriebszustandes elektrische Energie in das Versorgungsnetz 4 ein und stellt somit ein Energieangebot der Produktionsanlage 2 zur Verfügung. Im Falle des Dieselgenerators 8 lässt sich das Energieangebot durch Ansteuerung des Dieselgenerators 8 beispielsweise im Rahmen der Produktionsplanung vorgeben. Ist hingegen beispielsweise eine Solaranlage oder eine Windkraftanlage als Anschlussgerät vorgesehen, so ist das Energieangebot von den vorherrschenden Wetterbedingungen abhängig. In diesem Fall lässt sich das aktuelle Energieangebot sensorisch erfassen, während die zeitliche Entwicklung des Energieangebots tendenziell unbekannt ist.

Zudem ist in FIG 1 als Anschlussgerät ein Elektromotor 10 gezeigt, der Teil eines Energie-Rückgewinnungs-Systems ist und dementsprechend, ähnlich wie bei einem elektrisch betriebenen Automobil, je nach Betriebszustand entweder als Elektromotor 10 im eigentlichen Sinn oder jedoch als Generator 10 arbeitet. Somit wirkt der Elektromotor 10 je nach Betriebszustand als Energie-Verbraucher oder als Energie-Erzeuger.

Darüber hinaus sind als Anschlussgeräte zwei Akkumulatoren 12 an das elektrische Versorgungsnetz 4 angeschlossen, die elektrische Energie zwischenspeichern und bei einem Ladevorgang als Energie-Verbraucher oder bei einem Entladevorgang als Energie-Erzeuger fungieren.

Gemeinsam bilden die Anschlussgeräte ein selbstorganisierendes Netzwerk aus, in welchem die einzelnen Anschlussgeräte über Broadcast-Nachrichten an das gesamte Netzwerk miteinander kommunizieren. Diese Broadcast-Nachrichten sind vorzugsweise an den Standard "PROFINET" angelehnt und beinhalten Informationen über den aktuellen Energiebedarf und die zeitliche Entwicklung des Energiebedarfs oder das aktuelle Energieangebot und die zeitliche Entwicklung des Energieangebots des entsprechenden Anschlussgerätes. Innerhalb des selbstorganisierenden Netzwerks wird daraufhin eine reagierende und vorzugsweise darüber hinaus vorausschauende Regulierung der Energieflüsse im elektrischen Versorgungsnetz 4 derart initialisiert, dass der Energiebedarf der als Energie-Verbraucher wirkenden Anschlussgeräte durch das Energieangebot der als Energie-Erzeuger wirkenden Anschlussgeräte gedeckt wird. Dabei wird in erster Instanz versucht auf die Mitwirkung von Energiezwischenspeichern, wie den Akkumulatoren 12, zu verzichten. Nur wenn sich Energieangebot und Energiebedarf nicht decken, wird ein Ausgleich mit Hilfe der Zwischenspeicher vorgenommen. Auf diese Weise sollen unnötige Lade- und Entladevorgänge an den Zwischenspeichern vermieden werden, die üblicherweise mit Verlusten an elektrischer Energie verbunden sind.

Obwohl in moderne Produktionsanlagen 2 häufig auch Solaranlagen oder Windkraftanlagen eingebunden sind und zunehmend darüber hinaus Energie-Rückgewinnungs-Systeme zum Einsatz kommen, sind Produktionsanlagen 2 typischerweise auf eine externe Energiequelle angewiesen, um einen Ausgleich der Energiebilanz der Produktionsanlage 2 zu erreichen. Hierzu ist das elektrische Versorgungsnetz 4 der Produktionsanlage 2 im Ausführungsbeispiel über einen sogenannten EVU-Anschluss 14 an das elektrische Verteilernetz eines Energieversorgerunternehmens angeschlossen. Jener EVU-Anschluss 14 wirkt dabei nicht als Anschlussgerät und ist dementsprechend kommunikativ nicht in das selbstorganisierende Netzwerk der Anschlussgeräte eingebunden. Für das Netzwerk stellt der EVU-Anschluss 14 eine unerschöpfliche Quelle oder eine unerschöpfliche Senke dar, durch welche die zeitabhängige Energiebilanz der Produktionsanlage 2 permanent ausgeglichen wird.

Neben dem Ausgleich der Energiebilanz werden bei der vorausschauenden Regulierung der Energieflüsse im elektrischen Versorgungsnetz 4 zwei weitere Zielsetzungen verfolgt. Zum einen soll bei einer über die Produktionsplanung vorgegebenen Produktion die elektrische Energie, die über den EVU-Anschluss 14 bezogen wird, möglichst gering gehalten werden, um die Energiekosten für den Betreiber der Produktionsanlage 2 entsprechend gering zu halten. Zum anderen gilt es, die zeitabhängige Last, die die Produktionsanlage 2 aus Sicht des Verteilernetzes des Energieversorgerunternehmens darstellt, möglichst konstant zu halten.

Ein derartiges selbstorganisierendes Netzwerk lässt sich alternativ zum Beispiel auch bei einer automatisierten Gepäckförderanlage 16 vorteilhaft einsetzen, wie sie beispielsweise an Flughäfen zum Einsatz kommt und wie sie in FIG 2 schematisch dargestellt ist. Hier bilden kurze, beispielsweise lediglich wenige Meter lange Förderbandsegmente 18 zusammen eine Sortier- und Beförderungsanlage mit einer Gesamtförderstrecke von mehreren Kilometern, beispielsweise 30 - 50 km, aus. Jedes dieser Förderbandsegmente 18 weist an einem Ende eine Lichtschranke 20 auf und wird mit Hilfe eines Elektromotors 10 angetrieben, der zudem als Generator 10 nicht mehr benötigte kinetische Energie teilweise zurück in elektrische Energie umwandelt.

Bewegt sich nun ein Gepäckstück 22 auf ein Förderbandsegment 18 zu, so wird die endseitig am Förderbandsegment 18 angeordnete Lichtschranke 20 unterbrochen und das entsprechende Förderbandsegment 18 durch den Elektromotor 10 gestartet. Das Gepäckstück 22 wird sodann über das Förderbandsegment 18 weiter befördert, bis dieses die Lichtschranke 20 eines nachfolgend positionierten Förderbandsegments 18 unterbricht, woraufhin die Energierückgewinnung mit Hilfe des als Generator 10 arbeitenden Elektromotors 10 des betrachteten Förderbandsegments 18 beginnt. Die so zurückgewonnene elektrische Energie wird über ein gemeinsames elektrisches Versorgungsnetz 4 an ein weiteres Förderbandsegment 18 weitergereicht, welches im selbstorganisierenden Netzwerk, das von den Förderbandsegmenten 18 gebildet wird, einen Energiebedarf angemeldet hat.

In dieses selbstorganisierende Netzwerk sind dabei nicht nur die Förderbandsegmente 18 einer Förderstrecke 24 eingebunden, sondern auch die Förderbandsegmente 18 der typischerweise vorhandenen redundanten Förderstrecken 24. Aufgrund der großen Anzahl von Förderbandsegmenten 18 einer solchen Sortierund Beförderungsanlage wäre es mit einem hohen technischen Aufwand verbunden, die Energieflüsse im gemeinsamen Versorgungsnetz 4 mit Hilfe einer zentralen Steuereinheit zu regulieren. Auf eben diese zentrale Steuereinheit wird bei der Nutzung des selbstorganisierenden Netzwerks verzichtet.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Produktionsanlage
- 4: elektrisches Versorgungsnetz
- 6: Arbeitsstation
- 8: Dieselgenerator
- 10: Elektromotor/Generator
- 12: Akkumulator
- 14: EVU-Anschluss
- 16: Gepäckförderanlage
- 18: Förderbandsegment
- 20: Lichtschranke
- 22: Gepäckstück
- 24: Förderstrecke

## Patentansprüche

1. Verfahren zur vorausschauenden Regulierung der Energieflüsse in einem elektrischen Versorgungsnetz (4) einer Automatisierungsanlage (2,16) mit einer Anzahl von Anschlussgeräten (6,8,10,12), welche an das Versorgungsnetz (4) angeschlossen sind, wobei mehrere dieser Anschlussgeräte (10) einen Elektromotor (10) aufweisen, der je nach Betriebsmodus entweder als Generator (10) oder als elektrischer Antrieb (10) wirkt,
**dadurch gekennzeichnet, dass**
die Anschlussgeräte (6,8,10,12) Informationen über ihren Energiebedarf oder ihr Energieangebot untereinander austauschen, dass
die Anschlussgeräte (6,8,10,12) Informationen über die zu erwartende zeitliche Entwicklung ihres Energiebedarfs oder ihres Energieangebots untereinander austauschen und dass die Anschlussgeräte (6,8,10,12) basierend auf diesen Informationen Energie untereinander austauschen,
wobei die Informationen als Broadcast Nachrichten ausgebildet sind, insbesondere gemäß dem Standard PROFINET und
wobei die Anschlussgeräte (6,8,10,12) als Energie-Verbraucher (6,10,12), Energie-Erzeuger (8,10,12) oder Energie-Speicher (12) wirken und
wobei die Energieflüsse derart reguliert werden, dass der Energiebedarf der Energie-Verbraucher (6,10,12) vorrangig durch das Energieangebot der Energie-Erzeuger (8,10,12) gedeckt wird indem
das Energieangebot des Energie-Erzeugers (8,10,12) direkt dem Energie-Verbraucher (6,10,12) zugeführt wird.

2. Verfahren nach Anspruch 1,
**dadurch gekennzeichnet, dass** für den Austausch von Informationen im Wesentlichen Datenprotokolle ohne Vorgabe eines Adressaten genutzt werden.

3. Verfahren nach einem der Ansprüche 1 oder 2,
**dadurch gekennzeichnet, dass** die Anschlussgeräte (6,8,10,12) ein selbstorganisierendes Gerätenetzwerk (6,8,10,12) ausbilden.

4. Verfahren nach Anspruch 3,
**dadurch gekennzeichnet, dass** das Gerätenetzwerk (6,8,10,12) in Subnetzwerke unterteilt ist, wobei die Anschlussgeräte (6,8,10,12) eines Subnetzwerkes Informationen und Energie untereinander austauschen und wobei die Subnetzwerke Informationen und Energie untereinander austauschen.

5. Verfahren nach einem der Ansprüche 1 bis 4,
**dadurch gekennzeichnet, dass** das Versorgungsnetz (4) an ein externes Versorgungsnetz (14) angeschlossen ist, welches die zeitabhängige Differenz zwischen einem vorgegebenen Energiebedarf und einem vorgegebenen Energieangebot aller Anschlussgeräte (6,8,10,12) ausgleicht.

6. Verfahren nach Anspruch 5,
**dadurch gekennzeichnet, dass** die Energieflüsse derart reguliert werden, dass die zeitabhängige Differenz zwischen einem zeitabhängig vorgegebenen Energiebedarf und einem zeitabhängig vorgegebenen Energieangebot aller Anschlussgeräte (6,8,10,12) im Wesentlichen konstant ist.

7. Verfahren nach Anspruch 5 oder 6,
**dadurch gekennzeichnet, dass** die Energieflüsse derart reguliert werden, dass die zeitabhängige Differenz zwischen einem zeitabhängig vorgegebenen Energiebedarf und einem zeitabhängig vorgegebenen Energieangebot aller Anschlussgeräte (6,8,10,12) im zeitlichen Mittel minimiert ist.

8. Verfahren nach einem der Ansprüche 1 bis 7,
**dadurch gekennzeichnet, dass** zumindest ein Anschlussgerät (10,12) je nach Betriebszustand als Energie-Verbraucher (10,12), Energie-Erzeuger (10,12) oder Energie-Speicher (12) wirkt.

9. Energieregulierungssystem (6,8,10,12) für eine Automatisierungsanlage (2) mit einem elektrischen Versorgungsnetz (4) und mit einer Anzahl von Anschlussgeräten (6,8,10,12), welche an das Versorgungsnetz (4) angeschlossen sind, wobei mehrere dieser Anschlussgeräte (10) einen Elektromotor (10) aufweisen, der je nach Betriebsmodus entweder als Generator (10) oder als elektrischer Antrieb (10) wirkt, eingerichtet zur vorausschauenden Regulierung der Energieflüsse im Versorgungsnetz (4) nach einem der vorherigen Ansprüche.

10. Automatisierungsanlage (2,16) mit einem elektrischen Versorgungsnetz (4), mit einer Anzahl von Anschlussgeräten (6,8,10,12), welche an das Versorgungsnetz (4) angeschlossen sind, wobei mehrere dieser Anschlussgeräte (10) einen Elektromotor (10) aufweisen, der je nach Betriebsmodus entweder als Generator (10) oder als elektrischer Antrieb (10) wirkt, und mit einem Energieregulierungssystem (6,8,10,12) nach Anspruch 9.

11. Automatisierungsanlage (16) nach Anspruch 10 umfassend eine aus Förderband-Segmenten (18) aufgebaute Logistikanlage (16), wobei die Förderband-Segmente (18) als Anschlussgeräte (18) an das Versorgungsnetz (4) angeschlossen sind und wobei die Förderband-Segmente (18) je nach Betriebszustand als Energie-Verbraucher (10) oder als Energie-Erzeuger (10) wirken.

12. Automatisierungsanlage (16) nach Anspruch 11,
**dadurch gekennzeichnet, dass** die Förderband-Segmente (18) Lichtschranken (20) aufweisen und derart eingerichtet sind, dass ein Förderband-Segment (18) nur dann gestartet wird, wenn ein Gegenstand (22) auf das entsprechende Förderband-Segment (18) gelangt, und dass das entsprechende Förderband-Segment (18) in einen Energierückgewinnungsmodus versetzt wird, sobald der Gegenstand (22) das entsprechende Förderband-Segment (18) wieder verlässt.

## Claims

1. Method for the proactive regulation of the energy flows in an electrical supply network (4) of an automation installation (2, 16) with a number of connecting devices (6, 8, 10, 12) which are connected to the supply network (4), wherein a plurality of these connecting devices (10) have an electric motor (10) which acts either as a generator (10) or as an electric drive (10), depending on its operating mode, **characterized in that** the connecting devices (6, 8, 10, 12) exchange information with one another relating to their energy requirement or their energy supply, **in that** the connecting devices (6, 8, 10, 12) exchange information on the expected variation with time in their energy requirement or their energy supply, and **in that** the connecting devices (6, 8, 10, 12) exchange energy with one another on the basis of this information,
wherein the information is formed as broadcast messages, in particular according to the PROFINET standard, and
wherein the connecting devices (6, 8, 10, 12) act as energy consumers (6, 10, 12), energy producers (8, 10, 12) or energy stores (12), and wherein the energy flows are regulated in such a way that the energy requirement of the energy consumers (6, 10, 12) is covered primarily by the energy supply of the energy producers (8, 10, 12) **in that**
the energy supply of the energy producer (8, 10, 12) is fed directly to the energy consumer (6, 10, 12).

2. Method according to Claim 1,
**characterized in that** data protocols without specification of an addressee are used for the exchange of information.

3. Method according to one of Claims 1 or 2,
**characterized in that** the connecting devices (6, 8, 10, 12) form a self-organizing device network (6, 8, 10, 12).

4. Method according to Claim 3,
**characterized in that** the device network (6, 8, 10, 12) is subdivided into subnetworks, wherein the connecting devices (6, 8, 10, 12) of a subnetwork exchange information and energy with one another, and wherein the subnetworks exchange information and energy with one another.

5. Method according to one of Claims 1 to 4,
**characterized in that** the supply network (4) is connected to an external supply network (14) which balances the time-dependent difference between a specified energy requirement and a specified energy supply of all connecting devices (6, 8, 10, 12).

6. Method according to Claim 5,
**characterized in that** the energy flows are regulated in such a way that the time-dependent difference between a time-dependently specified energy requirement and a time-dependently specified energy supply of all connecting devices (6, 8, 10, 12) is essentially constant.

7. Method according to Claim 5 or 6,
**characterized in that** the energy flows are regulated in such a way that the time-dependent difference between a time-dependently specified energy requirement and a time-dependently specified energy supply of all connecting devices (6, 8, 10, 12) is minimized on average over time.

8. Method according to one of Claims 1 to 7,
**characterized in that** at least one connecting device (10, 12) acts as an energy consumer (10, 12), an energy producer (10, 12) or an energy store (12), depending on its operational status.

9. Energy regulation system (6, 8, 10, 12) for an automation installation (2) with an electrical supply network (4) and with a number of connecting devices (6, 8, 10, 12) which are connected to the supply network (4), wherein a plurality of these connecting devices (10) have an electric motor (10) which acts as a generator (10) or as an electric drive (10), depending on its operating mode, configured for the proactive regulation of the energy flows in the supply network (4) according to one of the preceding Claims.

10. Automation installation (2, 16) with an electrical supply network (4), with a number of connecting devices (6, 8, 10, 12) which are connected to the supply network (4), wherein a plurality of these connecting devices (10) have an electric motor (10) which acts as a generator (10) or as an electric drive (10), depending on its operating mode and with an energy regulation system (6, 8, 10, 12) according to Claim 9.

11. Automation installation (16) according to Claim 10, comprising a logistics installation (16) constructed from conveyor belt segments (18), wherein the conveyor belt segments (18) are connected as connecting devices (18) to the supply network (4), and wherein the conveyor belt segments (18) act as energy consumers (10) or as energy producers (10), depending on their operational status.

12. Automation installation (16) according to Claim 11, **characterized in that** the conveyor belt segments (18) have light barriers (20) and are configured in such a way that a conveyor belt segment (18) is started up only when an object (22) reaches the corresponding conveyor belt segment (18), and **in that** the corresponding conveyor belt segment (18) is switched to an energy recovery mode as soon as the object (22) again leaves the corresponding conveyor belt segment (18).

## Revendications

1. Procédé de régulation prévisionnelle des flux d'énergie dans un réseau de distribution électrique (4) d'une installation d'automatisation (2, 16) comprenant un nombre d'appareils de raccordement (6, 8, 10, 12) qui sont raccordés au réseau de distribution (4), plusieurs de ces appareils de raccordement (10) présentant un moteur électrique (10) qui, selon le mode de fonctionnement, agit comme générateur (10) ou comme entraînement électrique (10),
**caractérisé en ce que**
les appareils de raccordement (6, 10, 12) échangent entre eux des informations sur leur besoin d'énergie ou sur leur offre d'énergie,
les appareils de raccordement (6, 10, 12) échangent entre eux des informations sur l'évolution attendue dans le temps de leur besoin d'énergie ou de leur offre d'énergie et
les appareils de raccordement (6, 8, 10, 12) échangent de l'énergie entre eux sur la base de ces informations, les informations étant formées sous la forme de messages de diffusion, en particulier selon la norme PROFINET, et les appareils de raccordement (6, 8, 10, 12) agissant comme consommateurs d'énergie (6, 10, 12), producteurs d'énergie (8, 10, 12) ou accumulateurs d'énergie (12) et les flux d'énergie étant régulés de manière telle que le besoin d'énergie des consommateurs d'énergie (6, 10, 12) est prioritairement couvert par l'offre d'énergie des producteurs d'énergie (8, 10, 12) par
amenée directe de l'offre d'énergie du producteur d'énergie (8, 10, 12) au consommateur d'énergie (6, 10, 12).

2. Procédé selon la revendication 1, **caractérisé en ce que** pour l'essentiel, des protocoles de données sans spécification d'un destinataire sont utilisés pour l'échange d'informations.

3. Procédé selon l'une des revendications 1 ou 2, **caractérisé en ce que** les appareils de raccordement (6, 8, 10, 12) forment un réseau d'appareils auto-organisateur (6, 8, 10, 12).

4. Procédé selon la revendication 3, **caractérisé en ce que** le réseau d'appareils (6, 8, 10, 12) est subdivisé en sous-réseaux, les appareils de raccordement (6, 8, 10, 12) d'un sous-réseau échangeant des informations et de l'énergie entre eux et les sous-réseaux échangeant des informations et de l'énergie entre eux.

5. Procédé selon l'une des revendications 1 à 4, **caractérisé en ce que** le réseau de distribution (4) est raccordé à un réseau de distribution externe (14) qui compense la différence en fonction du temps entre un besoin d'énergie donné et une offre d'énergie donnée de tous les appareils de raccordement (6, 8, 10, 12).

6. Procédé selon la revendication 5, **caractérisé en ce que** les flux d'énergie sont régulés de manière telle que la différence en fonction du temps entre un besoin d'énergie, donné en fonction du temps, et une offre d'énergie, donnée en fonction du temps, de tous les appareils de raccordement (6, 8, 10, 12) est sensiblement constante.

7. Procédé selon la revendication 5 ou 6, **caractérisé en ce que** les flux d'énergie sont régulés de manière telle que la différence en fonction du temps entre un besoin d'énergie, donné en fonction du temps, et une offre d'énergie, donnée en fonction du temps, de tous les appareils de raccordement (6, 8, 10, 12) est minimisée en moyenne temporelle.

8. Procédé selon l'une des revendications 1 à 7, **caractérisé en ce qu'**au moins un appareil de raccordement (10, 12) agit, selon son état de fonctionnement, comme consommateur d'énergie (10, 12), producteur d'énergie (10, 12) ou accumulateur d'énergie (12).

9. Système de régulation d'énergie (6, 8, 10, 12) pour une installation d'automatisation (2) comprenant un réseau de distribution électrique (4) et un nombre d'appareils de raccordement (6, 8, 10, 12) qui sont raccordés au réseau de distribution (4), plusieurs de ces appareils de raccordement (10) présentant un moteur électrique (10) qui, selon le mode de fonctionnement, agit comme générateur (10) ou comme entraînement électrique (10), configuré pour la régulation prévisionnelle des flux d'énergie dans le réseau de distribution (4) selon l'une des revendications précédentes.

10. Installation d'automatisation (2, 16) comprenant un réseau de distribution électrique (4), comprenant un nombre d'appareils de raccordement (6, 8, 10, 12) qui sont raccordés au réseau de distribution (4), plusieurs de ces appareils de raccordement (10) présentant un moteur électrique (10) qui, selon le mode de fonctionnement, agit comme générateur (10) ou comme entraînement électrique (10), et comprenant un système de régulation d'énergie (6, 8, 10, 12) selon la revendication 9.

11. Installation d'automatisation (16) selon la revendication 10, comprenant une installation logistique (16) construite à partir de segments de convoyeur (18), les segments de convoyeur (18) étant raccordés au réseau de distribution (4) en tant qu'appareils de raccordement (18) et les segments de convoyeur (18) agissant comme consommateurs d'énergie (10) ou comme producteurs d'énergie (10) selon l'état de fonctionnement.

12. Installation d'automatisation (16) selon la revendication 11, **caractérisée en ce que** les segments de convoyeur (18) présentant des barrières photoélectriques (20) et sont configurés de telle sorte qu'un segment de convoyeur (18) ne démarre que si un objet (22) parvient au segment de convoyeur (18) correspondant et **en ce que** le segment de convoyeur (18) correspondant est mis dans un mode de récupération d'énergie dès que l'objet (22) quitte à nouveaux le segment de convoyeur (18) correspondant.
